# EUROPEAN PATENT APPLICATION

(11) **EP 1 674 297 A1**
(43) Date of publication of application: **28.06.2006**
(21) Application number: 05112085.5
(22) Date of filing: 13.12.2005
(51) Int. Cl.: B60C 17/04, B60C 17/06

(54) **Tire support ring**

(30) Priority: 21.12.2004 US 18823
(71) Applicant: THE GOODYEAR TIRE & RUBBER COMPANY, Akron, Ohio 44316-0001 (US)
(72) Inventor: Sandstrom, Paul Harry, Cuyahoga Falls, Ohio 44223 (US); Delong, John David, Akron, Ohio 44333 (US)
(74) Representative: Kutsch, Bernd

(57) **Abstract**

The invention relates to a run flat safety support ring intended to be mounted on a wheel rim (12) inside a tire (14) equipping a vehicle for supporting the tire tread in case of loss of inflation pressure, the support ring (10) comprising a generally cylindrical crown (18) intended to come in contact with the interior of the tire tread in the event of the loss of inflation pressure, and leaving a clearance from the tire tread interior at normal pressure. The crown (18) comprises a self lubricating rubber composition, the self lubricating rubber composition comprising at least one rubber and from 1 to 50 phr of at least one additive selected from alcohols of formula I, esters of formula II, or amides of formula III

R₁-OH (I)

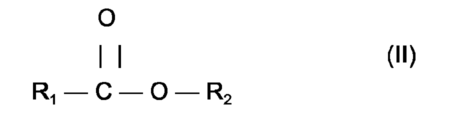

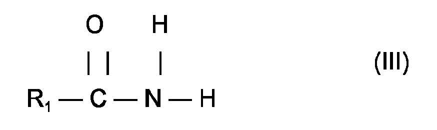

wherein R₁ and R₂ are independently selected from C₁₂ - C₃₆ alkyl, C₁₂ - C₃₆ alkenyl, or C₁₂ - C₃₆ alkadienyl.

## Description

### Background of the Invention

It is often desired to provide tires for vehicles that can be operated in a deflated condition for a suitable distance at a desired speed. The purposes have been varied, ranging from a desire to eliminate a vehicular spare tire so that its occupied space could be more efficiently used for other purposes and, also, a desire to enable a vehicle to remain operable even with a punctured pneumatic tire for a suitable time or distance whether or not a spare tire is available.

In some instances, such objectives have been proposed to be accomplished by positioning a run-flat device such as a support ring within the tire-wheel cavity to prevent the tire, upon an appreciable loss of internal inflation pressure, from going completely flat. Such run-flat devices can be substantially rigid in nature and prevent a total collapse of the tire by supporting the tire's inner surface in its crown region in proximity of the ground contacting portion. In such condition, the tire is prevented from going flat against its rim and, moreover, substantially retains its inflated circumferential shape and enables its vehicle to continue its travel over a more reasonable distance.

However, it is considered necessary to provide lubricity at the interface between the supporting ring and a collapsing tire's inner surface in order to retard or reduce an attendant potential frictional, destructive heat build up at the tire's inner surface. Accordingly, it is often desired to provide a lubricant for such interface.

### Summary of the Invention

The present invention relates to a run flat safety support ring according to claim 1. Dependent claims cover preferred embodiments of the invention.

### Brief Description of the Drawings

Fig. 1 shows a cross-section of a safety support ring in a tire.
Fig. 2 illustrates a safety support ring along section 2-2 of Fig. 1.

### Detailed Description of the Invention

There is disclosed a run flat safety support ring intended to be mounted on a wheel rim inside a tire equipping a vehicle for supporting the tire tread in case of loss of inflation pressure, comprising a generally cylindrical crown intended to come in contact with the interior of the tire tread in the event of the loss of inflation pressure, and leaving a clearance from the tire tread interior at normal pressure, the crown comprising a self lubricating rubber composition, the self lubricating rubber composition comprising at least one rubber and from 1 to 50 phr of at least one additive selected from alcohols of formula I, esters of formula II, or amides of formula III

R₁-OH (1)

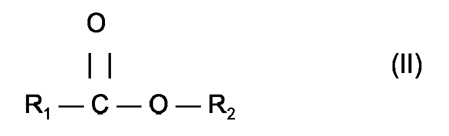

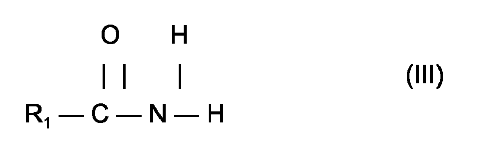

wherein R₁ and R₂ are independently selected from C₁₂ - C₃₆ alkyl, C₁₂ - C₃₆ alkenyl, or ₁₂ - C₃₆alkadienyl.

In one embodiment, the rubber composition may include at least one alcohol of formula I

R₁-OH (I)

where R₁ is C₁₂ - C₃₆ alkyl, C₁₂ - C₃₆alkenyl, or C₁₂ - C₃₆alkadienyl. In one embodiment, the alcohol may include 1-dodecanol (lauryl alcohol), 1-tetradecanol (myristyl alcohol), 1-hexadecanol (cetyl alcohol), 1-octadecanol (stearyl alcohol), 1-eicosanol (arachidyl alcohol), 1-docosanol (behenyl alcohol), 1-tetracosanol, 1-hexacosanol, 1-octaconsanol, 1-triacontanol (melissyl alcohol), 1-dotriacontanol, 1-tetratriacontanol and mixtures thereof. In one embodiment, the alcohol comprises 1-octadecanol.

One suitable octadecanol is commercially available from Procter & Gamble Chemicals under the designation CO-1895 Stearyl Alcohol. This product has a melting point of 58°C and a G.C. Chain length distribution (percent by weight) of C₁₄, 0.1 percent; C₁₆, 1.3 percent; C₁₈, 95.5 percent; and C₂₀, 0.9 percent.

In one embodiment, the rubber composition may include at least one ester of formula II 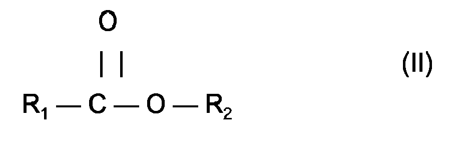 where R₁ and R₂ are independently selected from C₁₂ - C₃₆ alkyls. The esters may be produced by esterification of C₁₂-C₃₆ fatty acids with C₁₂-C₃₆ alcohols under suitable conditions as is known in the art. In one embodiment, the ester may be formed by reaction of the C₁₂-C₃₆ fatty acid with an aliphatic alcohol having from about 12 to about 36 carbon atoms under esterification conditions. In another embodiment, ester may be formed by reaction of a C₁₂-C₃₆ fatty acid with a dihydric or polyhydric alcohol, for example, glycerin, ethylene glycol, propylene glycol, pentaerythritol, and polyethylene glycol, and the like. In one embodiment, the ester may be a fatty acid ester of an aliphatic alcohol including dodecyl alcohol, tridecyl alcohol, tetradecyl alcohol, pentadecyl alcohol, hexadecyl alcohol, heptadecyl alcohol, octadecyl alcohol, nonadecyl alcohol, eicosyl alcohol, heneicosyl alcohol, docosyl alcohol or mixtures thereof. In one embodiment, the ester may be any of the dodecyl, tridecyl, tetradecyl, pentadecyl, hexadecyl, heptadecyl, octadecyl, nonadecyl, eicosyl, heneicosyl, or docosyl esters of any of stearic, oleic, palmitic, 9,12-linoleic, 9,11-linoleic (conjugated linoleic), pinolenic, eicosenoic, palmitoleic, magaric, octadecadienoic, or octadectrienoic acids. In one embodiment, the ester is a fatty acid ester of dodecyl alcohol, hexadecyl alcohol or octadecyl alcohol. In one embodiment, the ester comprises octadecyl octadecanoate (also known as stearyl stearate).

In one embodiment, the rubber composition may include at least one amide of the formula III 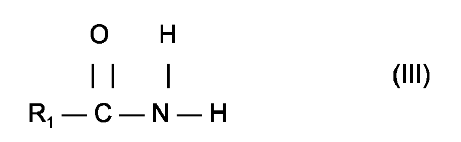 where R₁ is C₁₂ - C₃₆ alkyl, C₁₂ - C₃₆alkenyl, or C₁₂ - C₃₆alkadienyl. In one embodiment, the amide may be an amide of a saturated or unsaturated monovalent amines, or saturated or unsaturated polyvalent amines, for example, caprylamine, laurylamine, palmitylamine, stearylamine, oleylamine, myristylamine, methylenediamine, ethylenediamine, hexamethylenediamine, and ammonia, and the like. In one embodiment, the amide may be caprylamide, laurylamide, palmitylamide, stearylamide, oleamide, myristylamide, and the like.

For ease in handling, the alcohol of formula I, ester of formula II, or amide of formula III may be used as is or may be deposited on suitable carriers. Examples of carriers which may be used in the present invention include silica, carbon black, alumina, kieselguhr, silica gel and calcium silicate.

In one embodiment, the rubber composition comprises from 1 to 50 parts by weight, per 100 parts by weight of rubber (phr), of the additive selected from alcohols of formula I, esters of formula II, and amides of formula III. In another embodiment, the rubber composition comprises from 2 to 25 phr of the additive selected from alcohols of formula I, esters of formula II, and amides of formula III.

In addition to the additive selected from alcohols of formula I, esters of formula II, and amides of formula III, the rubber composition contains a rubber containing olefinic unsaturation. The phrase "rubber or elastomer containing olefinic unsaturation" is intended to include both natural rubber and its various raw and reclaim forms as well as various synthetic rubbers. In the description of this invention, the terms "rubber" and "elastomer" may be used interchangeably, unless otherwise prescribed. The terms "rubber composition", "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate. Additional examples of rubbers which may be used include a carboxylated rubber, silicon-coupled and tin-coupled star-branched polymers. In one embodiment the rubber or elastomers are polybutadiene, SBR, and synthetic and natural polyisoprene.

In one embodiment, the rubber to be combined with the additive selected from alcohols of formula I, esters of formula II, and amides of formula III may be a blend of at least two diene based rubbers. In one embodiment, a blend of two or more rubbers may be used such as cis 1,4-polyisoprene rubber (natural or synthetic), emulsion and solution polymerization derived styrene butadiene rubbers, and cis 1,4-polybutadiene rubbers.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

The solution polymerization prepared SBR (S-SBR) typically has a bound styrene content in a range of 5 to 50, alternatively 9 to 36, percent. The S-SBR can be conveniently prepared, for example, by organo lithium catalyzation in the presence of an organic hydrocarbon solvent.

The cis 1,4-polybutadiene rubber (BR) is considered to be beneficial for a purpose of enhancing the tire wear. Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

In addition, conventional fillers may be also present. The amount of such conventional fillers may range from 10 to 250 phr. In one embodiment, the filler is present in an amount ranging from 20 to 100 phr.

The commonly employed siliceous pigments which may be used in the rubber compound include conventional pyrogenic and precipitated siliceous pigments (silica). In one embodiment precipitated silica is used. The conventional siliceous pigments that may be employed in this invention are in one embodiment precipitated silicas such as, for example, those obtained by the acidification of a soluble silicate, e.g., sodium silicate.

Such conventional silicas might be characterized, for example, by having a BET surface area, as measured using nitrogen gas, in one embodiment in the range of 40 to 600, and in another embodiment in a range of 50 to 300 square meters per gram. The BET method of measuring surface area is described in the Journal of the American Chemical Society, Volume 60, Page 304 (1930). The conventional silica may also be typically characterized by having a dibutylphthalate (DBP) absorption value in a range of 100 to 400, and more usually 150 to 300.

The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, etc; silicas available from Rhone-Poulenc, with, for example, designations of Z1165MP and Z165GR and silicas available from Degussa AG with, for example, designations VN2 and VN3, etc.

Commonly employed carbon blacks can be used as a conventional filler. Representative examples of such carbon blacks include N110, N115, N121, N134, N220, N231, N234, N242, N293, N299, N315, N326, N330, M332, N339, N343, N347, N351, N358, N375, N539, N550, N582, N630, N642, N650, N660, N683, N754, N762, N765, N774, N787, N907, N908, N990 and N991. These carbon blacks have iodine absorptions ranging from 9 to 170 g/kg and DBP No. ranging from 34 to 150 cm³/100 g.

In one embodiment the rubber composition for use in the tire component may additionally contain a sulfur containing organosilicon compound. Examples of suitable sulfur containing organosilicon compounds are of the formula:

Z - Alk - Sₙ - Alk - Z

in which Z is selected from the group consisting of 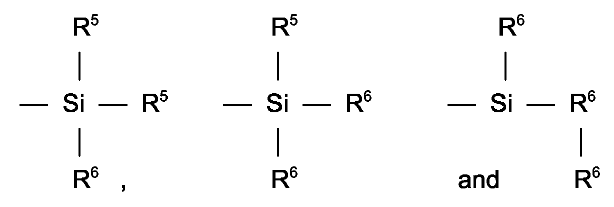 where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

Specific examples of sulfur containing organosilicon compounds which may be used in accordance with the present invention include: 3,3'-bis(methyl butylethoxysilylpropyl) tetrasulfide, 3,3'-bis(di t-butylmethoxysilylpropyl) tetrasulfide, 2,2'-bis(phenyl methyl methoxysilylethyl) trisulfide, 3,3'-bis(diphenyl isopropoxysilylpropyl) tetrasulfide, 3,3'-bis(diphenyl cyclohexoxysilylpropyl) disulfide, 3,3'-bis(dimethyl ethylmercaptosilylpropyl) tetrasulfide,and 4,4'-bis(trimethoxysilylcyclohexylene) tetrasulfide.

In one embodiment the sulfur containing organosilicon compounds are 3,3'-bis(trimethoxy or triethoxy silylpropyl) sulfides. In one embodiment the compounds are 3,3'-bis(triethoxysilylpropyl) disulfide and 3,3'-bis(triethoxysilylpropyl) tetrasulfide. Therefore as to the above formula, in one embodiment Z is 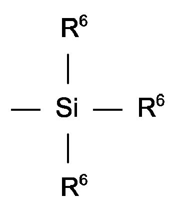 where R⁶ is an alkoxy of 2 to 4 carbon atoms, with 2 carbon atoms being used in one embodiment; alk is a divalent hydrocarbon of 2 to 4 carbon atoms with 3 carbon atoms being used in one embodiment; and n is an integer of from 2 to 5 with 2 and 4 being used in one embodiment.

The amount of the sulfur containing organosilicon compound of the above formula in a rubber composition will vary depending on the level of other additives that are used. Generally speaking, the amount of the compound of the above formula will range from 0.5 to 20 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, such as oils, resins including tackifying resins and plasticizers, fillers, pigments, fatty acid, zinc oxide, waxes, antioxidants and antiozonants and peptizing agents. Representative examples of sulfur donors include elemental sulfur (free sulfur), an amine disulfide, polymeric polysulfide and sulfur olefin adducts. In one embodiment, the sulfur vulcanizing agent is elemental sulfur. The sulfur vulcanizing agent may be used in an amount ranging from 0.5 to 8 phr. Typical amounts of tackifier resins, if used, comprise 0.5 to 10 phr. Typical amounts of processing aids comprise 1 to 50 phr. Such processing aids can include, for example, aromatic, naphthenic, and/or paraffinic processing oils. Typical amounts of antioxidants comprise 1 to 5 phr. Representative antioxidants may be, for example, diphenyl-p-phenylenediamine. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator is in one embodiment a guanidine, dithiocarbamate or thiuram compound.

The ingredients are typically mixed in at least two stages, namely at least one non-productive stage followed by a productive mix stage. The final curatives including sulfur vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber and compound is mixed in one or more non-productive mix stages. If the rubber composition contains a sulfur-containing organosilicon compound, one may subject the rubber composition to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions and the volume and nature of the components. For example, the thermomechanical working may be from 1 to 20 minutes.

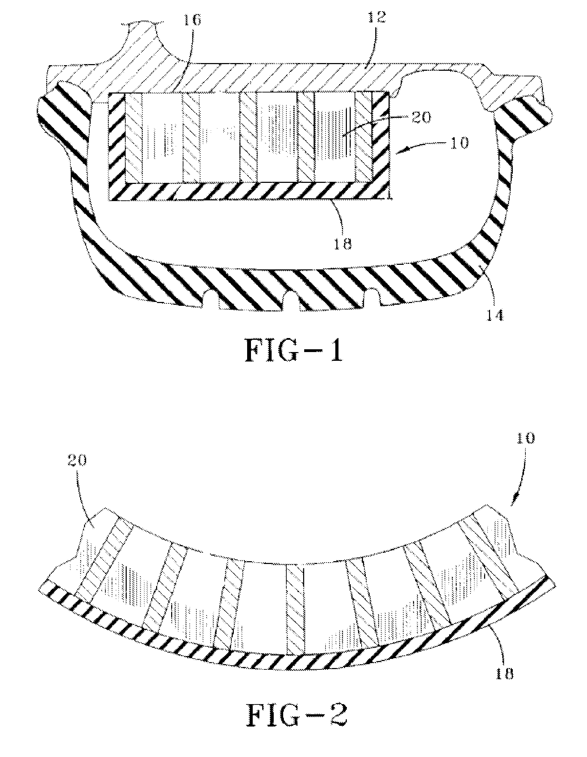

FIGS. 1 and 2 illustrate a support ring 10 in accordance with one embodiment of the present invention. The ring 10 is mounted around a tire rim 12, and inside the cavity of a corresponding tire 14. The rim 12 is asymmetrical, and has a platform 16 on which the support ring is mounted. The support ring 10 is generally cylindrical and has a crown 18 and a rigid annular body 20 located radially inward of the crown 18. The crown 18 is intended to come into contact with the interior of the tire 14 in the event of the loss of inflation pressure. During normal inflation pressure, as seen in FIG. 1, there is clearance between the crown 18 and the tire inside. Annular body 20 may be constructed of any suitable rigid material capable of providing support during a deflation event, for example, a reinforced composite. Crown 18 comprises the self-lubricating rubber composition of the present invention crown and is intended to come in contact with the interior of the tire 14 in the event of the loss of inflation pressure.

The rubber crown may be constructed by any of various rubber processing methods as are known in the art, including but not limited to calendaring. In one embodiment, the calendared rubber composition may be joined to annular support to form crown of the support ring. The rubber composition in the crown may be cured before or after joining with the annular support.

Vulcanization of the support ring crown is generally carried out at conventional temperatures ranging from about 100°C to 200°C. Preferably, the vulcanization is conducted at temperatures ranging from about 110°C to 180°C. Any of the usual vulcanization processes may be used such as heating in a press or mold, heating with superheated steam or hot air.

### EXAMPLE I

In this Example, a alcohol of formula I and an ester of formula II were evaluated in a rubber composition containing carbon black.

Rubber compositions containing the materials set out in Table 1 were prepared using four separate stages of addition (mixing); namely three non-productive mix stages and one productive mix stage. The non-productive stages were mixed for four minutes to a rubber temperature of 160°C. The productive stage was mixed for two minutes, and the drop temperature for the productive mix stage was 115°C.

The rubber compositions are identified as Sample A-H. Samples A, D, E and H are considered as controls due to the absence of the alcohol or ester.

The Samples were cured at 150°C for 32 minutes.

Table 2 illustrates the physical properties of the cured Samples A through H.

The coefficient of friction (COF) test is done according to ASTM D-1894 on a Model SP-2000 Slip/Peel Tester from IMASS Inc. Samples are tested at 6 inches per minute using a 200 g sled. The COF is measured against a polished aluminum surface.

**Table 1**

| Sample | Control A | B | C | Control D | Control E | F | G | Control H |
|---|---|---|---|---|---|---|---|---|
| **Non Productive Stage 1** | | | | | | | | |
| Natural Rubber | 80 | 80 | 80 | 80 | 80 | 80 | 80 | 80 |
| Carbon Black | 12 | 12 | 12 | 12 | 12 | 12 | 12 | 12 |
| Wax | 0.4 | 0.4 | 0.4 | 0.4 | 0.4 | 0.4 | 0.4 | 0.4 |
| Fatty Acid | 2 | 2 | 2 | 2 | 2 | 2 | 2 | 2 |
| Zinc Oxide | 3 | 3 | 3 | 3 | 3 | 3 | 3 | 3 |
| Stearyl stearate | 0 | 2.5 | 5 | 0 | 0 | 0 | 0 | 0 |
| Aromatic oil | 0 | 0 | 0 | 2.5 | 5 | 0 | 0 | 0 |
| Octadecanol | 0 | 0 | 0 | 0 | 0 | 2.5 | 5 | 0 |

| **Non Productive Stage 2** | | | | | | | | |
|---|---|---|---|---|---|---|---|---|
| polybutadiene | 20 | 20 | 20 | 20 | 20 | 20 | 20 | 20 |
| Carbon black | 10 | 10 | 10 | 10 | 10 | 10 | 10 | 10 |
| Silica | 7 | 7 | 7 | 7 | 7 | 7 | 7 | 7 |

| **Non Productive Stage 3** | | | | | | | | |
|---|---|---|---|---|---|---|---|---|
| carbon black | 13 | 13 | 13 | 13 | 13 | 13 | 13 | 13 |
| Antioxidant | 1 | 1 | 1 | 1 | 1 | 1 | 1 | 1 |
| Silane Coupler | 3 | 3 | 3 | 3 | 3 | 3 | 3 | 3 |

| **Productive Stage** | | | | | | | | |
|---|---|---|---|---|---|---|---|---|
| Antioxidant | 0.5 | 0.5 | 0.5 | 0.5 | 0.5 | 0.5 | 0.5 | 0.5 |
| Zinc Oxide | 1 | 1 | 1 | 1 | 1 | 1 | 1 | 1 |
| Sulfur | 1.9 | 1.9 | 1.9 | 1.9 | 1.9 | 1.91 | 1.9 | 1.9 |
| Accelerator | 1.35 | 1.35 | 1.35 | 1.35 | 1.35 | 1.35 | 1.35 | 1.35 |

**Table 2**

| | A | B | C | D | E | F | G | H |
|---|---|---|---|---|---|---|---|---|
| **RPA 500** | | | | | | | | |
| Uncured G' Cured G' | 142 | 131 | 127 | 139 | 129 | 132 | 122 | 155 |
| 10% Strain Cured TD | 1546 | 1427 | 1331 | 1479 | 1412 | 1443 | 1345 | 1574 |
| 10% Strain | 0.061 | 0.059 | 0.053 | 0.054 | 0.057 | 0.054 | 0.05 | 0.055 |

| **Rheometer, 150°C** | | | | | | | | |
|---|---|---|---|---|---|---|---|---|
| Max Torq | 20.98 | 19.65 | 18.3 | 19.93 | 19.2 | 19.41 | 18.35 | 20.85 |
| Min Torq | 1.89 | 1.73 | 1.69 | 1.83 | 1.76 | 1.77 | 1.61 | 2.02 |
| Delta Torq | 19.09 | 17.92 | 16.61 | 18.1 | 17.44 | 17.64 | 16.74 | 18.83 |
| T90 | 10.34 | 10.56 | 10.76 | 10.81 | 11.25 | 10.25 | 9.85 | 10.48 |

| **Stress-Strain, cured 32 minutes at 150°** | | | | | | | | |
|---|---|---|---|---|---|---|---|---|
| Tens Strength | 21.63 | 23.11 | 23.93 | 23.23 | 22.46 | 22.8 | 23.2 | 24.57 |
| Elong Break | 406 | 443 | 468 | 448 | 455 | 439 | 460 | 442 |
| M300 | 15.14 | 14.14 | 13.34 | 13.96 | 12.99 | 14.08 | 13.27 | 15.15 |

| **Hardness, cured 32 minutes at 150°C** | | | | | | | | |
|---|---|---|---|---|---|---|---|---|
| RT | 66 | 65 | 64 | 63 | 63 | 65 | 64 | 65 |
| 100°C | 62 | 61 | 58 | 60 | 59 | 60 | 58 | 61 |

| **Rebound, cured 32 minutes at 150°C** | | | | | | | | |
|---|---|---|---|---|---|---|---|---|
| RT | 63 | 62 | 61 | 63 | 62 | 62 | 60 | 64 |
| 100°C | 73 | 74 | 74 | 74 | 73 | 74 | 74 | 74 |

| **Tear Strength 32/150°C** | | | | | | | | |
|---|---|---|---|---|---|---|---|---|
| 95°C, N | 36 | 47 | 53 | 44 | 49 | 43 | 49 | 36 |

| **Tear Strength 32/150°C** | | | | | | | | |
|---|---|---|---|---|---|---|---|---|
| 23°C, N | 143 | 166 | 181 | 181 | 236 | 168 | 178 | 168 |

| **DIN Abrasion 32/150°C** | | | | | | | | |
|---|---|---|---|---|---|---|---|---|
| Relative loss | 105 | 91 | 85 | 105 | 108 | 79 | 60 | 95 |

| **Coefficient of Friction** | | | | | | | | |
|---|---|---|---|---|---|---|---|---|
| Value | 2.86 | 2.38 | 2.17 | 2.87 | 2.79 | 2.23 | 1.59 | 2.71 |

It can be seen from Table 2 that use of stearyl stearate or stearyl alcohol resulted in reduced coefficient of friction as compared with use of aromatic oil or no additive. In addition, the use of stearyl stearate or stearyl alcohol results in improved abrasion resistance as compared with the controls.

### EXAMPLE II

In this Example, two amides of formula III were evaluated in a rubber composition containing carbon black.

Rubber compositions containing the materials set out in Table 3 were prepared using four separate stages of addition (mixing); namely three non-productive mix stages and one productive mix stage. The non-productive stages were mixed for four minutes to a rubber temperature of 160°C. The productive stage was mixed for two minutes, and the drop temperature for the productive mix stage was 115°C.

The rubber compositions are identified as Samples I-P. Samples I, L, M and P are considered as controls due to the absence of the amide.

The Samples were cured at 150°C for 32 minutes.

Table 4 illustrates the physical properties of the cured Samples I through P.

The coefficient of friction (COF) test is done according to ASTM D-1894 on a Model SP-2000 Slip/Peel Tester from IMASS Inc. Samples are tested at 6 inches per minute using a 200 g sled. The COF is measured against a polished aluminum surface.

**Table 3**

| | Control I | J | K | Control L | Control M | N | O | Control P |
|---|---|---|---|---|---|---|---|---|
| **Non Productive Stage** | | | | | | | | |
| Natural Rubber | 100 | 100 | 100 | 100 | 70 | 70 | 70 | 70 |
| polybutadiene | 0 | 0 | 0 | 0 | 12 | 12 | 12 | 12 |
| E-SBR | 0 | 0 | 0 | 0 | 18 | 18 | 18 | 18 |
| Carbon black | 50 | 50 | 50 | 50 | 50 | 50 | 50 | 50 |
| Fatty Acid | 2 | 2 | 2 | 2 | 2 | 2 | 2 | 2 |
| Zinc Oxide | 5 | 5 | 5 | 5 | 5 | 5 | 5 | 5 |
| Antioxidant | 2 | 2 | 2 | 2 | 2 | 2 | 2 | 2 |
| Stearamide | 0 | 5 | 0 | 0 | 0 | 5 | 0 | 5 |
| Oleamide | 0 | 0 | 5 | 0 | 0 | 0 | 5 | 0 |
| Processing Oil | 5 | 0 | 0 | 5 | 5 | 0 | 0 | 5 |

| **Productive Mix Stage** | | | | | | | | |
|---|---|---|---|---|---|---|---|---|
| Sulfur | 1.4 | 1.4 | 1.4 | 1.4 | 1.4 | 1.4 | 1.4 | 1.4 |
| Accelerator | 1 | 1 | 1 | 1 | 1 | 1 | 1 | 1 |

**Table 4**

| **RPA 500** | | | | | | | | |
|---|---|---|---|---|---|---|---|---|
| Unc G' Cured G' | 190 | 181 | 184 | 195 | 204 | 174 | 192 | 183 |
| 10% Strain Cured TD | 1351 | 1370 | 1339 | 1374 | 1474 | 1471 | 1434 | 1418 |
| 10% Strain | 0.102 | 0.097 | 0.098 | 0.104 | 0.105 | 0.09 | 0.103 | 0.105 |

| **Rheometer, 150°C** | | | | | | | | |
|---|---|---|---|---|---|---|---|---|
| Max Torq | 16.68 | 17.79 | 17.32 | 16.66 | 17.71 | 17.83 | 18.01 | 17.25 |
| Min Torq | 2.6 | 2.53 | 2.62 | 2.55 | 2.62 | 2.37 | 2.63 | 2.47 |
| Delta Torq | 14.08 | 15.26 | 14.7 | 14.11 | 14.55 | 15.46 | 15.38 | 14.78 |
| T90 | 12.15 | 6.79 | 6.81 | 11.93 | 16.61 | 8.72 | 8.32 | 16.2 |

| **Stress-Strain 32/150°C** | | | | | | | | |
|---|---|---|---|---|---|---|---|---|
| Tens Strength | 24 | 24.2 | 24.8 | 23.2 | 22.5 | 22.6 | 23.1 | 22.5 |
| Elong Break | 482 | 450 | 486 | 473 | 462 | 432 | 460 | 464 |
| M300 | 12.8 | 15.2 | 13.5 | 12.8 | 13 | 14.8 | 13.7 | 13 |

| **Hardness 32/150°C** | | | | | | | | |
|---|---|---|---|---|---|---|---|---|
| RT | 64 | 69 | 66 | 64 | 67 | 71 | 68 | 66 |
| 100°C | 58 | 58 | 57 | 58 | 60 | 60 | 60 | 60 |

| **Rebound 32/150°C** | | | | | | | | |
|---|---|---|---|---|---|---|---|---|
| RT | 49 | 46 | 44 | 48 | 48 | 45 | 43 | 47 |
| 100°C | 62 | 64 | 63 | 61 | 60 | 61 | 61 | 60 |

| **Tear Strength 32/150°C** | | | | | | | | |
|---|---|---|---|---|---|---|---|---|
| 95°C, N | 195 | 145 | 162 | 175 | 119 | 95 | 103 | 109 |

| **Tear Strength 32/150°C** | | | | | | | | |
|---|---|---|---|---|---|---|---|---|
| 95°C, N, Aged | 136 | 96 | 137 | 121 | 69 | 161 | 76 | 69 |

| **DIN Abrasion 32/150°C** | | | | | | | | |
|---|---|---|---|---|---|---|---|---|
| Relative loss | 149 | 120 | 121 | 156 | 121 | 104 | 93 | 112 |

| **Coefficient of Friction** | | | | | | | | |
|---|---|---|---|---|---|---|---|---|
| Value | 3.22 | 2.61 | 1.9 | 3.41 | 3.26 | 1.58 | 1.35 | 2.97 |

It can be seen from Table 4 that use of stearamide or oleamide resulted in reduced coefficient of friction as compared with use of processing oil or no additive. In addition, the use of stearamide or oleamide results in improved abrasion resistance as compared with the controls.

## Claims

1. A run flat safety support ring intended to be mounted on a wheel rim (12) inside a tire (14) equipping a vehicle for supporting the tire tread in case of loss of inflation pressure, the support ring (10) comprising a generally cylindrical crown (18) intended to come in contact with the interior of the tire tread in the event of the loss of inflation pressure, and leaving a clearance from the tire tread interior at normal pressure, **characterized by** the crown (18) comprising a self lubricating rubber composition, the self lubricating rubber composition comprising at least one rubber and from 1 to 50 phr of at least one additive selected from alcohols of formula I, esters of formula II, or amides of formula III
R₁-OH (I) 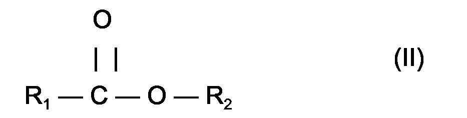 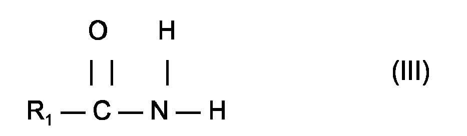
wherein R₁ and R₂ are independently selected from C₁₂ - C₃₆ alkyl, C₁₂ - C₃₆ alkenyl, or C₁₂ - C₃₆alkadienyl.

2. The run flat safety support ring of claim 1, wherein the additive comprises 1-octadecanol and/or wherein the additive comprises stearyl sterate.

3. The run flat safety support ring of claim 1 or 2, wherein the additive comprises an amide selected from caprylamide, laurylamide, palmitylamide, stearylamide, oleamide, and myristylamide.

4. The run flat safety support ring of at least one of the previous claims, wherein the composition further comprises 10 to 250 phr of a filler selected from carbon black and silica.

5. The run flat safety support ring of at least one of the previous claims, wherein the composition further comprises from 0.5 to 20 phr of a sulfur containing organosilicon compound of the formula:
Z - Alk - Sₙ - Alk - Z
in which Z is selected from the group consisting of 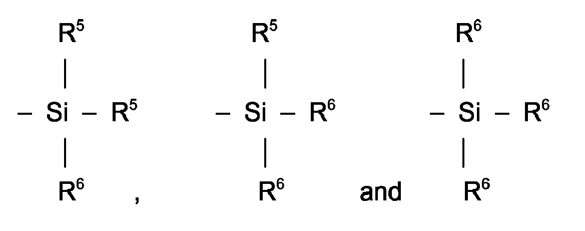 where R⁵ is an alkyl group of 1 to 4 carbon atoms, cyclohexyl or phenyl; R⁶ is alkoxy of 1 to 8 carbon atoms, or cycloalkoxy of 5 to 8 carbon atoms; Alk is a divalent hydrocarbon of 1 to 18 carbon atoms and n is an integer of 2 to 8.

6. The run flat safety support ring of at least one of the previous claims, wherein the at least one additive is present in an amount ranging from 2 to 25 phr.

7. The run flat safety support ring of at least one of the previous claims, wherein the at least one additive is selected from 1-dodecanol (lauryl alcohol), 1-tetradecanol (myristyl alcohol), 1-hexadecanol (cetyl alcohol), 1-octadecanol (stearyl alcohol), 1-eicosanol (arachidyl alcohol), 1-docosanol (behenyl alcohol), 1-tetracosanol, 1-hexacosanol, 1-octaconsanol, 1-triacontanol (melissyl alcohol), 1-dotriacontanol, and 1-tetratriacontanol.

8. The run flat safety support ring of at least one of the previous claims, wherein the at least one additive is selected from the dodecyl, tridecyl, tetradecyl, pentadecyl, hexadecyl, heptadecyl, octadecyl, nonadecyl, eicosyl, heneicosyl, or docosyl esters of any of stearic, oleic, palmitic, 9,12-linoleic, 9,11-linoleic (conjugated linoleic), pinolenic, eicosenoic, palmitoleic, magaric, octadecadienoic, or octadectrienoic acids.

9. A run flat tire and wheel assembly comprising the run flat safety support ring (10) of at least one of the previous claims.
